# EUROPÄISCHE PATENTSCHRIFT

(11) **EP 3 944 934 B1**
(45) Veröffentlichungstag und Bekanntmachung des Hinweises auf die Patenterteilung: **03.06.2026**
(21) Anmeldenummer: 21187951.5
(22) Anmeldetag: 27.07.2021
(51) Int. Cl.: B25J 9/16

(54) **VERFAHREN ZUR AUTOMATISCHEN BESTIMMUNG VON KONSTRUKTIONSPARAMETERN EINES GREIFERS**
METHOD FOR AUTOMATICALLY DETERMINING THE CONSTRUCTION PARAMETERS OF A GRIPPER
PROCÉDÉ DE DÉTERMINATION AUTOMATIQUE DES PARAMÈTRES DE CONSTRUCTION D'UN PRÉHENSEUR

(30) Priorität: 29.07.2020 DE 102020120027
(43) Veröffentlichungstag der Anmeldung: 02.02.2022
(73) Patentinhaber: Liebherr-Verzahntechnik GmbH, 87437 Kempten (DE)
(72) Erfinder: GRÜNER, Patrick, 87700 Memmingen (DE); BERGER, Markus, 87700 Memmingen (DE); MATTERN, Thomas, 87669 Rieden (DE)
(74) Vertreter: Lorenz Seidler Gossel Part. mbB

(56) Entgegenhaltungen:
- CN-A- 110 216 671
- JP-A- 2015 100 866
- US-A1- 2019 077 015
- PHILIP KURREK: "Reinforcement Learning Lifecycle for the Design of Advanced Robotic Systems", 2020 IEEE CONFERENCE ON INDUSTRIAL CYBERPHYSICAL SYSTEMS (ICPS), 10 June 2020 (2020-06-10), pages 230 - 235, XP093153757, ISBN: 978-1-7281-6389-5, DOI: 10.1109/ICPS48405.2020.9274698

## Beschreibung

Die vorliegende Erfindung betrifft ein Verfahren zur Herstellung eines Greifers, bei welchem eine automatische Bestimmung von Konstruktionsparametern des Greifers durch mindestens ein Computersystem erfolgt, mit den Schritten: Vorgabe einer Greifaufgabe und Automatische Bestimmung von Konstruktionsparametern eines für die Greifaufgabe einsetzbaren Greifers durch das Computersystem.

Ein solches Verfahren ist aus der US 2019/0152058 A1 bekannt. Dort wird die Form von aus einem weichen Material gefertigten Greifpads eines Fingergreifers durch eine Optimierungsfunktion an die Geometrie des zu greifenden Objekts angepasst. Dieses Verfahren ist jedoch auf eine sehr spezifische Greifaufgabe und die sehr spezifischen Konstruktionsparameter der Formgestaltung der Greifpads beschränkt.

Druckschrift CN 110 216 671 A zeigt ein Verfahren und ein System zum Trainieren eines mechanischen Greifers basierend auf einer Computersimulation. Das Verfahren umfasst die folgenden Schritte: Aufbauen einer Greifobjektumgebung bzw. einer Greiferumgebung der Simulation; Sammeln von zweidimensionalen Bilddaten in der Umgebung des gegriffenen Objekts durch Verwenden einer Sensorsimulation in der Greiferumgebung und Bestimmen von dreidimensionalen Informationen von mindestens einem gegriffenen Objekt gemäß den zweidimensionalen Bilddaten; und Steuern des Greifers in der Greiferumgebung, um mindestens einmal ein maschinelles Lerntraining des Simulationsgreifens gemäß den dreidimensionalen Informationen des gegriffenen Objekts durchzuführen, um einen optimalen Erfassungsmodellparameter in der aktuellen Umgebung des gegriffenen Objekts zu erhalten.

US 2019/077015 A zeigt eine Vorrichtung für maschinelles Lernen umfassend: eine Zustandsbeobachtungseinrichtung zum Erfassen mindestens eines Teils von Bilddaten, die durch Abbilden eines Übertragungsziels als Eingabedaten erhalten werden; Etikettenerfassungsmittel zum Erfassen von Informationen bezüglich Greifmitteln, die an einem Roboter angebracht sind, um das Transferziel als ein Etikett zu übertragen; und eine Lerneinrichtung zum Durchführen eines überwachten Lernens unter Verwendung eines Satzes der durch die Zustandsbeobachtungseinrichtung erfassten Eingabedaten und des durch die Labelerfassungseinrichtung erfassten Labels als Lehrerdaten, um ein Lernmodell zu konstruieren, das Informationen bezüglich der für die Übertragung geeigneten Greifeinrichtung ausgibt. Weiterhin kann anstelle der Zustandsbeobachtungseinrichtung eine Simulation eingesetzt werden, um Konstruktionsparameter eines Greifers zu bestimmen.

JP 2015 100866 A setzt sich die Bereitstellung einer Robotersimulationsvorrichtung, die es ermöglicht, eine Form einer Roboterhand durch Berechnung in einem virtuellen Raum auszuwählen, wodurch eine Greiferfolgsrate erhöht wird, zur Aufgabe. Als Lösung wird ein Operationsteil vorgeschlagen, welches einen Werkstückstapelzustand in einem virtuellen Raum reproduziert. Ein Tiefenmessungssimulationsteil simuliert die Messung der Tiefe jedes Punkts eines Werkstücks durch einen Tiefenmesssensor, um Tiefendaten zu erzeugen. Ein Handauswahlteil berechnet die Greifmöglichkeit des Werkstücks in Bezug auf Formen einer Vielzahl von Roboterhänden auf der Grundlage eines Formmodells der Roboterhand und der Tiefendaten und wählt die Form der Roboterhand auf der Grundlage der Greifmöglichkeiten.

Druckschrift Philip Kurrek, "Reinforcement Learning Lifecycle fort he Desgin of Advanced Robotic Systems", 2020 IEEE Conference on Industrial Cyberphysical Systems (ICPS), 10.06.2020, Seiten 230 - 235, XP093153757 zeigt verschiedene Aspekte des Einsatzes von KI zur Steuerung von Robotern.

Aufgabe der vorliegenden Erfindung ist es daher, ein verbesserstes Verfahren zur Herstellung eines Greifers zur Verfügung zu stellen.

Diese Aufgabe wird durch ein Verfahren gemäß Anspruch 1 gelöst. Bevorzugte Ausgestaltungen der vorliegenden Erfindung sind Gegenstand der Unteransprüche.

Die vorliegende Erfindung umfasst ein Verfahren zur Herstellung eines Greifers, bei welchem eine automatische Bestimmung von Konstruktionsparametern eines Greifers durch mindestens ein Computersystem erfolgt, mit den Schritten:
- Vorgabe einer Greifaufgabe,
- Automatische Bestimmung von Konstruktionsparametern eines für die Greifaufgabe einsetzbaren Greifers durch das Computersystem und
- Herstellung des Greifers auf Grundlage der Konstruktionsparameter.

Dabei ist vorgesehen, dass die Greifaufgabe das Greifen von Werkstücken aus einem Behälter umfasst, wobei im Rahmen der Greifaufgabe Werkstücke, welche in dem Behälter enthalten sind, durch den Greifer gegriffen und aus dem Behälter entnommen werden, wobei die automatische Ermittlung der Konstruktionsparameter unter Verwendung einer künstlichen Intelligenz erfolgt, welche die Greifaufgabe als Eingangsparameter erhält. Weiterhin wird zum Trainieren der künstlichen Intelligenz eine Simulation des Greifens der Werkstücke aus dem Behälter eingesetzt, welche auf einem virtuellen Modell des Greifers, der Werkstücke und des Behälters beruht, wobei die Simulation die Greifaufgabe in Form von virtuellen, ungeordnet und/oder geordnet in dem Behälter angeordneten Werkstücken simuliert, welche durch den virtuellen Greifer gegriffen und nacheinander aus dem Behälter entnommen werden, wobei die Simulation den gesamten Prozess der Entleerung des Behälters simuliert. Dabei erfolgt beim Trainieren der künstlichen Intelligenz die Belohnung und/oder Bestrafung unter Berücksichtigung des Entleerungsgrads des Behälters.

Die Erfinder der vorliegenden Erfindung haben erkannt, dass die erheblich komplexeren Anforderungen an die Auslegung des Greifers und die vielen anderen Faktoren, welche das Greifen von Werkstücken aus einem Behälter bestimmen, durch den Einsatz einer künstlichen Intelligenz berücksichtigt werden können, um so automatisiert die Konstruktionsparameter eines hierfür einsetzbaren Greifers zu bestimmen.

In einer möglichen Ausgestaltung der vorliegenden Erfindung umfasst die Greifaufgabe allgemein den Vorgang des Aufnehmens eines Werkstücks durch einen Aktuator. Die Greifaufgabe kann noch durch die, nach der Aufnahme folgende, Ablage des Werkstückes durch den Aktuator weiter präzisiert werden.

Im Rahmen der vorliegenden Erfindung kann die Greifaufgabe weiterhin das nacheinander erfolgende Entnehmen einer Mehrzahl von in dem Behälter angeordneten Werkstücken umfassen, insbesondere eine komplette Entleerung des Behälters.

Insbesondere kann die Greifaufgabe dabei durch Vorgabe des Werkstücks, welches gegriffen werden soll, und/oder des Behälters, aus welchem das Werkstück entnommen werden soll, definiert sein. Insbesondere können hierfür Parameter des Werkstücks und/oder des Behälters zur Definition der Greifaufgabe vorgegeben werden, bspw. ein CAD-Modell oder eine Punktewolke des Werkstücks und die Größe und/oder ein CAD-Modell des Behälters.

Alternativ oder zusätzlich kann die Greifaufgabe auch Vorgaben zur Umgebung, in welcher die Greifaufgabe durchgeführt wird, umfassen. Beispielsweise kann die Greifaufgabe Vorgaben zu einem Zellenaufbau und/oder Aktuator umfassen. Bei dem Aktuator kann es sich insbesondere um eine Vorrichtung handeln, welche den Greifer bewegt, beispielsweise einen Mehr-Achs-Roboter.

Gemäß der vorliegenden Erfindung wird wie oben beschrieben zum Trainieren der künstlichen Intelligenz eine Simulation des Greifens von Werkstücken aus einem Behälter eingesetzt, welche auf einem virtuellen Modell des jeweiligen Greifers, der Werkstücke und des Behälters beruht. Die vorliegende Erfindung berücksichtigt daher nicht nur die Greifsituation am Werkstück, sondern auch die weiteren Elemente, welche den Prozess der Entleerung des Behälters bestimmen.

Insbesondere kann die Simulation in Kombination mit einem Verbesserungsalgorithmus zum Trainieren der künstlichen Intelligenz genutzt werden.

In einer möglichen Ausgestaltung der vorliegenden Erfindung können die künstliche Intelligenz und Simulation auf zwei unterschiedlichen Computersystemen laufen und gegenseitig Eingabe- und Ausgabewerte miteinander kommunizieren, um die Rechendauer zu verkürzen.

Bevorzugt simuliert das virtuelle Modell die zum Bewegen des Greifers eingesetzte Vorrichtung, insbesondere einen Mehr-Achs-Roboters.

Erfindungsgemäß simuliert die Simulation wie oben beschrieben den gesamten Prozess der Entleerung des Behälters.

Die Simulation beruht in einer möglichen Ausgestaltung auf einer Bahnplanung, welche bei der tatsächlichen Implementierung der Greifaufgabe zur Ansteuerung des Greifers und/oder der den Greifer bewegenden Vorrichtung eingesetzt wird, und/oder auf einer Objekterkennung, welche bei der tatsächlichen Implementierung der Greifaufgabe zur Erfassung der Werkstücke anhand von Sensordaten eingesetzt wird, wobei im Rahmen der Simulation die Objekterkennung an Stelle von Sensordaten anhand einer Punktwolke erfolgt, welche mittels virtuellen Werkstücken erzeugt wurde. Bevorzugt erfolgt die Objekterkennung durch den Abgleich eines geometrischen Modells der zu greifenden Werkstücke mit der Punktwolke.

In einer möglichen Ausgestaltung simuliert die Simulation einen oder mehrere der folgenden Faktoren:
- Auffinden von für den Greifer zugänglichen Greifpunkten;
- Greifen von für den Greifer zugänglichen Werkstücken;
- Bewegungen des Greifers und/oder der zum Bewegen des Greifers eingesetzten Vorrichtung in den und aus dem Behälter;
- Kollisionen des Greifers und/oder der zum Bewegen des Greifers eingesetzten Vorrichtung mit Werkstücken und/oder dem Behälter und/oder der einer Störkontur.

Störkonturen können insbesondere durch andere Bauteile einer Zelle, in der der Griff in den Behälter durchgeführt wird, gegeben sein und werden bevorzugt im Rahmen der Simulation berücksichtigt.

Die Simulation des Auffindens von für den Greifer zugänglichen Greifpunkten kann dabei insbesondere mittels der oben genannten Objekterkennung und/oder Bahnplanung erfolgen.

Die Simulation der Bewegungen des Greifers und/oder der zum Bewegen des Greifers eingesetzten Vorrichtung in den und aus dem Behälter und/oder der Kollisionen des Greifers und/oder der zum Bewegen des Greifers eingesetzten Vorrichtung mit Werkstücken und/oder dem Behälter kann dabei insbesondere mittels der oben genannten Bahnplanung und/oder einer im Rahmen dieser Bahnplanung eingesetzten Kollisionsüberwachung erfolgen.

In einer möglichen Ausgestaltung ist vorgesehen, dass beim Trainieren der künstlichen Intelligenz die Belohnung und/oder Bestrafung weiterhin unter Berücksichtigung eines oder mehrerer der folgenden Werte erfolgt:
- Berechnungszeit bei der Greifpunktberechnung
- Auffindbarkeit von Greifpunkten.

Bevorzugt werden weiterhin einer oder mehrerer der folgenden Werte berücksichtigt:
- Griffsicherheit beim Greifen der Werkstücke
- Verhackungsfreiheit der Werkstücke beim Entnehmen.

In einer möglichen Ausgestaltung werden in der Simulation und/oder Bahnplanung eine oder mehrere Notgriffstrategien eingesetzt, wenn kein Werkstück erkannt wird, das so gegriffen werden kann, dass es aus dem Behälter entnommen werden kann. Insbesondere kann für diesen Fall ein Notgriff durchführt werden, um um eine vollständige Entleerung des Behälters zu ermöglichen.

In einer möglichen Ausgestaltung kann der Greifer als Notgriff an Punkten des Werkstücks greifen, die nicht als erlaubte Greifpunkte definiert sind, und das Werkstück an eine andere Position im Behälter ziehen und/oder das Werkstück aufheben und gezielt von einer bestimmten Höhe wieder in den Behälter fallen lassen

In einer möglichen Ausgestaltung kann der Greifer als Notgriffstrategie in dem Behälter gegen eines oder mehrere Werkstücke gefahren werden, um diese zu bewegen, ohne sie zu greifen, um Greifpunkte freizulegen. Die Kollision mit Werkstücken ist in diesem Fall zulässig und erwünscht.

Insbesondere kann der Greifer an den Wänden und/oder dem Boden des Behälters entlang verfahren werden, um durch Umrühren der Werkstücke im Behälter zu bewegen, sodass Greifpunkte wieder erkennbar sind.

Notgriffstrategien können in der Simulation und/oder in der Bahnplanung berücksichtigt werden, jedoch wird der häufige Einsatz von Notgriffstrategien bei dem Training der künstlichen Intelligenz bestraft. Je seltener der Einsatz von Notstrategien notwendig ist, desto besser.

In einer möglichen Ausgestaltung werden die Konstruktionsparameter des Greifers für einen vorgegebenen Bausatz von Elementen und/oder Geometrien bestimmt, aus welchen der Greifer aufgebaut wird. Ein solcher Bausatz gibt der künstlichen Intelligenz zum einen einen festen Rahmen, in welchem die Konstruktionsparameter bestimmt werden, und vereinfacht daher die zu lösende Aufgabe. Zudem erleichtert er die konstruktive Umsetzung der von der künstlichen Intelligenz ermittelten Konstruktionsparameter und die Herstellung eines entsprechenden Greifers.

Insbesondere kann der Bausatz einen vorgegebenen Bausatz von CAD-Elementen umfassen, aus welchen der Greifer aufgebaut wird. Insbesondere kann der Bausatz CAD-Elemente von Greifelementen, Bewegungsachsen und/oder Greifarmelenten umfassen.

Der Bausatz kann weiterhin eine Ausgleichseinheit, welche eine Ausweich-Bewegung des Greifers ermöglicht, umfassen.

Insbesondere kann die Ausgleichseinheit erst beim Überschreiten einer vorgegebenen ersten Belastung des Greifarms eine Ausweich-Bewegung des Greifers ermöglichen und unterhalb der ersten Belastung starr bleiben, wobei die erste Belastung bevorzugt größer ist als eine allein durch den Greifer und/oder das gegriffene Werkstück auf den Greifarm ausgeübte Belastung.

Insbesondere kann die Ausgleichseinheit so ausgestaltet sein, wie dies in der DE102012012988A1 beschrieben ist.

In einer möglichen Ausgestaltung wird der Bausatz der künstlichen Intelligenz zusätzlich zur Greifaufgabe als Eingangsparameter von einem Benutzer oder einer Software vorgegeben.

In einer möglichen Ausgestaltung betreffen die Konstruktionsparameter die Anzahl und/oder geometrische Anordnung von Greifelementen am Greifer und/oder die Abmessungen des Greifers. Die Erfinder der vorliegenden Erfindung haben dabei erkannt, dass diese Parameter für die Entleerung eines Behälters von erheblicher Bedeutung sind, während durch eine Optimierung der Geometrie der Greifflächen, wie sie aus dem Stand der Technik bekannt ist, für die Entleerung eines Behälters wenig gewonnen ist.

Bevorzugt umfassen die Konstruktionsparameter einen oder mehrere der folgenden Parameter des Greifers:
- Anzahl der Greifelemente;
- Anordnung und/oder Ausrichtung der Greifelemente- Kröpfung des Greifers und/oder des oder der Greifelemente bezüglich der letzten Achse der zum Bewegen des Greifers eingesetzten Vorrichtung;
- Länge des Greifers
- Breite des Greifers
- Winkelausrichtung einer Hauptachse des Greifers bezüglich der letzten Achse der zum Bewegen des Greifers eingesetzten Vorrichtung und/oder Winkelausrichtung einer Hauptachse des oder der Greifelemente bezüglich einer Hauptachse des Greifers und/oder bezüglich der letzten Achse der zum Bewegen des Greifers eingesetzten Vorrichtung.

In einer möglichen Ausgestaltung der Erfindung kann sowohl die Winkelausrichtung einer Hauptachse des Greifers bezüglich der letzten Achse des zum Bewegen des Greifers eingesetzten Vorrichtung als auch eine Winkelausrichtung und/oder ein Knickwinkel der Greifelemente bezüglich der Hauptachse des Greifers einen Parameter bilden. Dabei können die Greifelemente bezüglich der letzten Achse des Roboters parallel oder in einem Winkel angeordnet sein.

Die Kröpfung kann sich durch eine Kröpfung des Greifers und eine Kröpfung der Greifelemente ergeben.

In einer möglichen Ausgestaltung umfassen die Konstruktionsparameter den Einsatz und/oder Parameter einer Ausgleichseinheit.

In einer möglichen Ausgestaltung handelt es sich bei dem Greifer um einen mechanischen Greifer mit einer Mehrzahl von Greifelementen, insbesondere einer Mehrzahl von Fingern oder Backen, wobei die Konstruktionsparameter einen oder mehrere der folgenden Parameter des Greifers umfassen:
- Länge der Greifelemente
- Breite der Greifelemente
- Knickwinkel innerhalb des oder der Greifelemente
- Anordnung und/oder Ausrichtung der Greifelemente
- Hubweg
- Greifkraft.

Insbesondere kann ein Knickwinkel innerhalb des oder Greifelemente zur Winkelausrichtung der Hauptachse der Greifelemente und/oder zur Bereitstellung einer Kröpfung eingesetzt werden.

In einer möglichen Ausgestaltung handelt es sich bei dem Greifer um einen Magnetgreifer oder einen Sauggreifer handelt, bei welchem es sich bei den Greifelementen um Saugelemente oder Magnetelemente handelt, und die Konstruktionsparameter umfassen einen oder mehrere der folgenden Parameter des Greifers:
- für einen Sauggreifer:
   - Länge des oder der Saugelemente
   - Abstand der Saugelemente
   - Winkelausrichtung des oder der Saugelemente
   - Saugkraft des oder der Saugelemente
- für einen magnetischen Greifer:
   - Haltekraft des oder der Magnetelemente
   - geometrische Ausgestaltung des Polschuhs des oder der Magnetelemente.

Bei den Saugelementen kann es sich insbesondere um Saugnäpfe handeln.

In einer möglichen Ausgestaltung werden zur Vorgabe der Greifaufgabe als Eingangsparameter einer oder mehrere der folgenden Werte von einem Benutzer oder einer Software vorgegeben:
- Art des Greifers
- CAD Model oder Punktewolke der Werkstücke
- Greifbereiche an den Werkstücken
- Größe und/oder CAD-Modell des Behälters
- Anordnung der Werkstücke im Behälter
- Störkonturen in der Umgebung des Behälters
- Pfad des Greifers in und aus dem Behälter.

Insbesondere kann zur Definition der Greifaufgabe das CAD Model oder die Punktewolke des Werkstücks vorgegeben werden.

Neben dem CAD-Model oder der Punktewolke können noch weitere Eigenschaften des Werkstücks vorgegeben werden. Dies kann die Oberflächeneigenschaften des Werkstücks, wie beispielsweise die Rauigkeit und/oder die reflektierenden Eigenschaften der Werkstückoberfläche umfassen, sowie die Materialeigenschaften, wie beispielsweise magnetische Eigenschaften oder die Festigkeit eines Werkstückes umfassen.

Die Art des Greifers definiert insbesondere, ob es sich um einen mechanischen Greifer, einen Magnetgreifer oder einen Sauggreifer handelt.

Die Anordnung der Werkstücke im Behälter definiert insbesondere, ob die Werkstücke geordnet und/oder ungeordnet im Behälter angeordnet sind.

In einer möglichen Ausgestaltung werden auf Grundlage des CAD-Modells der Werkstücke und/oder der vorgegebeben Greifbereiche an den Werkstücken sowie eines virtuellen Modells des Greifers, welches anhand der von der künstlichen Intelligenz ermittelten Konstruktionsparameter erzeugt wird, vor oder im Rahmen der Durchführung der Simulation automatisiert Greifpunkte am Werkstück ermittelt, d. h. Punkte, an welchen das Werkstück mittels des Greifers gegriffen werden kann. Insbesondere kann die Menge aller prinzipiell möglichen Greifpunkte eines Werkstücks ermittelt und im Rahmen der Simulation zur Ermittlung der für den Greifer zugänglichen Greifpunkte herangezogen werden.

In einer möglichen Ausgestaltung wird ein von der künstlichen Intelligenz ausgegebener Satz von Konstruktionsparametern durch eine automatisierte Variation der Konstruktionsparameter und virtuelle Überprüfung der so definierten Greifer optimiert wird, wobei zur Überprüfung bevorzugt eine Simulation des Greifens von Werkstücken aus einem Behälter eingesetzt wird, welche auf einem virtuellen Modell des jeweiligen Greifers, der Werkstücke und des Behälters beruht.

Die Konstruktionsparameter können insbesondere Konstruktionsparameter die Auswahl, Anordnung und/oder Ausgestaltung von Elementen aus einem Bausatz von Elementen und/oder Geometrien betreffen, aus welchen der Greifer aufgebaut wird. Insbesondere kann der Bausatz einen vorgegebenen Bausatz von CAD-Elementen umfassen, aus welchen der Greifer aufgebaut wird.

In einer möglichen Ausgestaltung der vorliegenden Erfindung wird durch die Konstruktionsparameter ein CAD-Modell des Greifers definiert.

Insbesondere kann die Herstellung des Greifers auf Grundlage eines so bestimmten CAD-Modells des Greifers erfolgen.

Das erfindungsgemäße Verfahren kann durch ein Computersystem und/oder eine Software durchgeführt werden, welche(s) zur Durchführung eines Verfahrens, wie es oben beschrieben wurde, programmiert ist.

Das Computersystem umfasst insbesondere einen Mikroprozessor und eine Software, welche, läuft sie auf dem Mikroprozessor ab, die Schritte eines der oben genannten Verfahren durchführt.

Das Computersystem kann weiterhin eine Eingabe-Schnittstelle und/oder eine Ausgabe-Schnittstelle und/oder Eingabe-Elemente und/oder Ausgabeelemente umfassen.

Die Software umfasst bevorzugt Code, welcher, wird er ausgeführt, die Schritte eines der oben genannten Verfahren durchführt. Die Software ist bevorzugt auf einem Speichermedium gespeichert. Die vorliegende Erfindung umfasst dabei auch ein Speichermedium mit der darauf gespeicherten Software.

Die vorliegende Erfindung wird nun anhand von Ausführungsbeispielen und Zeichnungen näher beschrieben. Dabei zeigen:
- Fig. 1: ein Ausführungsbeispiel einer erfindungsgemäßen Greifaufgabe, bei welcher Werkstücke aus einem Behälter entnommen werden,
- Fig. 2: ein Ausführungsbeispiel eines Werkstücks mit möglichen Greifpunkten,
- Fig. 3: in der linken Darstellung die virtuelle Objekterfassung der Werkstücke und in der rechten Darstellung die Simulation des Entnehmens eines Werkstückes aus dem Behälter, und
- Fig. 4: eine Prinzipdarstellung von Konstruktionsparametern, welche in einem Ausführungsbeispiel erfindungsgemäß bestimmt werden.

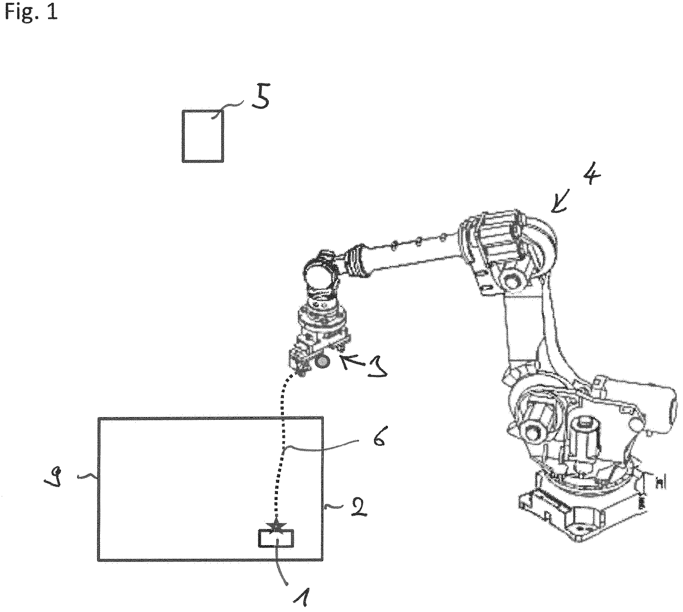

Fig. 1 zeigt eine typische Greifaufgabe, wie sie im Rahmen der vorliegenden Erfindung vorgegeben ist.

Im Rahmen der Greifaufgabe müssen Werkstücke 1, welche in einem Behälter 2 enthalten sind, durch einen Greifer 3 gegriffen und aus dem Behälter 2 entnommen werden. Die Werkstücke können in dem Behälter geordnet oder ungeordnet angeordnet sein. Insbesondere kann die vorliegende Erfindung dabei auch zum Einsatz kommen, wenn die Werkstücke 1 ungeordnet im Behälter 2 angeordnet sind.

Zum Bewegen des Greifers 3 ist eine Vorrichtung 4 vorgesehen, im Ausführungsbeispiel ein Mehr-Achs-Roboter 4. Insbesondere kann dabei ein Mehr-Achs-Roboter mit mehreren rotatorischen Bewegungsachsen zum Einsatz kommen, beispielsweise ein 6-Achs-Industrieroboter. Alternativ oder zusätzlich kann ein Linien- oder Flächenportal mit einer oder mehreren linearen Bewegungsachsen zum Einsatz kommen. An einem solchen Linien- oder Flächenportal kann der Greifer wiederum über einen Greifarm mit einer oder mehreren rotatorischen Achsen angeordnet sein.

Zum Erfassen der Werkstücke im Behälter ist ein Sensor 5 vorgesehen, insbesondere ein 3D-Sensor. Auf Grundlage der Daten des Sensors 5 wird eine Punktewolke erzeugt, welche die dreidimensionale Form der zum Sensor gewandte Oberfläche der Werkstücke 1 und des Behälters 2 wiedergibt. Eine Objekterfassung identifiziert aus diesen Daten die einzelnen Werkstücke 1, insbesondere durch einen Abgleich der Punktewolke mit Geometriedaten der Werkstücke.

Auf Grundlage dieser Identifikation werden jene Werkstücke ermittelt, welche durch den Greifer gegriffen werden können. Eine Bahnplanung plant auf dieser Grundlage die Ansteuerung des Greifers 3 und der Vorrichtung 4 zur Bewegung des Greifers, um ein Werkstück zu greifen und entlang einer Bahn 6 aus dem Behälter zu entnehmen.

Ziel ist hierbei eine möglichst vollständige Entleerung der Behälter 2. Bei den Behältern kann es sich beispielsweise um Kisten oder Körbe handeln, in welchen die Werkstücke angeliefert werden. Die Entnahme aus dem Behälter dient dabei insbesondere einer Beschickung einer Produktionsstraße mit den Werkstücken.

Als Greifer kann dabei sowohl ein mechanischer Greifer, ein Magnetgreifer und/oder ein Sauggreifer zum Einsatz kommen.

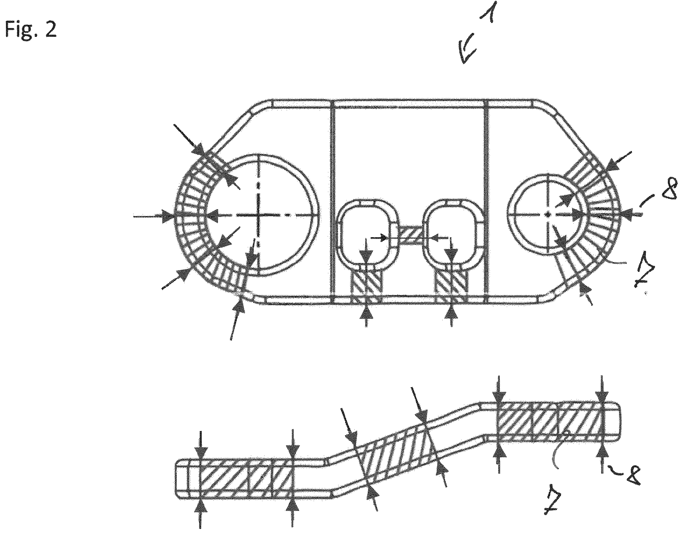

In Fig. 2 ist ein Beispiel für ein Werkstück 1 dargestellt, wie es bei eine solchen Greifaufgabe gegriffen werden soll. Das Werkstück 1 weist Greifbereiche 7 auf, an welche es durch einen mechanischen Greifer gegriffen werden kann. Mit 8 sind dabei die Bewegungsrichtungen der Greifelemente eines solchen Greifers zum Greifen an den entsprechenden Greifpunkten bezeichnet.

Die vorliegende Erfindung beruht auf der Erkenntnis, dass der für eine Greifaufgabe erzielbare Entleerungsgrad sowie die Effizienz des Entleerungsverfahrens entscheiden von der zur Greifaufgabe passenden Konstruktion des Greifers abhängen. Insbesondere sind dabei für unterschiedliche Werkstücke, aber auch für unterschiedliche Rahmenbedingungen wie Behälter, Vorrichtung zum Bewegen des Greifers und/oder Störkonturen jeweils andere Ausgestaltungen des Greifers besser für die Greifaufgabe geeignet.

Die vorliegende Erfindung stellt eine automatische Bestimmung von Konstruktionsparametern eines für eine solche Greifaufgabe einsetzbaren Greifers zur Verfügung. Erfindungsgemäß erfolgt die automatische Ermittlung der Konstruktionsparameter unter Verwendung einer künstlichen Intelligenz, welche die Greifaufgabe als Eingangsparameter erhält. Dabei erfolgt die automatische Ermittlung der Konstruktionsparameter unter Verwendung einer Simulation des Greifens von Werkstücken aus einem Behälter, welche auf einem virtuellen Modell des Greifers, der Werkstücke und des Behälters beruht.

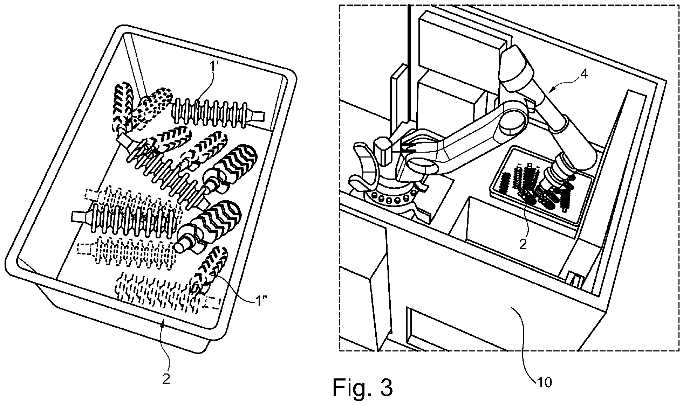

Fig. 3 zeigt dabei zwei im Rahmen der Simulation erfolgende Schritte.

Zunächst wird dabei (nicht dargestellt) anhand von Geometriedaten der Werkstücke ein befüllter Zustand des Behälters simuliert, wobei die Werkstücke beispielsweise zufällig, aber unter Beachtung der geometrischen und physikalischen Einschränkungen, in dem Behälter angeordnet werden können.

Auf dieser Grundlage wird eine dreidimensionale Punktwolke erzeugt, welche die einem virtuellen Sensor zugewandte Oberfläche der Werkstücke und des Behälters zeigt.

Wie in Fig. 3 links dargestellt werden die Werkstücke nunmehr identifiziert, indem die Form der dreidimensionalen Punktwolke mit Geometriedaten der Werkstücke verglichen werden. Auf Grundlage der Identifikation der Werkstücke werden jene Werkstücke 1' ermittelt, welche soweit frei zugänglich sind, dass sie gegriffen werden können. Hierzu werden auch die zur Verfügung stehenden Greifpunkte ermittelt. Mit 1" sind dagegen jene Bereiche der Punktewolke gekennzeichnet, in welchen eine Identifikation nicht erfolgt ist oder ein Greifen eines identifizierten Werkstücks nicht möglich ist. Die Identifikation der Werkstücke aus der dreidimensionalen Punktwolke und die Identifikation Werkstücke, welche gegriffen werden können, sowie der zugehörigen Greifpunkte kann in gleicher Weise erfolgen wie bei der tatsächlichen Durchführung der Greifaufgabe, nur unter Verwendung der virtuellen dreidimensionalen Punktwolke anstelle einer auf Grundlage von Sensordaten ermittelten dreidimensionalen Punktwolke.

Sind die Werkstücke, welche gegriffen werden können, sowie die Greifpunkte identifiziert, wird mittels einer Bahnplanung bestimmt, welches Werkstück mit welchem Greifpunkt als nächstes gegriffen werden soll und wie der Greifer und die diesen bewegende Vorrichtung hierfür angesteuert werden müssen. Dies erfolgt anhand eines virtuellen Modells der Werkstücke, des Greifers, der Vorrichtung, des Behälters sowie ggf. weiterer Störkonturen, welches in Fig. 3 rechts dargestellt ist. Insbesondere wird hierbei auch eine virtuelle Kollisionsüberwachung durchgeführt. Auch diese Bahnplanung kann in gleicher Weise erfolgen wie bei der tatsächlichen Durchführung der Greifaufgabe, aber eben auf Grundlage der virtuellen Daten.

Diese Greifsimulation wird nun erfindungsgemäß eingesetzt, um Konstruktionsparameter eines für eine Greifaufgabe geeigneten Greifers automatisch zu ermitteln. Die Greifsimulation verwendet hierzu ein virtuelles Modell des Greifers, welches durch diese Konstruktionsparameter definiert ist, und simuliert mit diesem virtuellen Modell die Greifaufgabe, um zu überprüfen, wie gut ein Greifer mit diesen Konstruktionsparametern für die Greifaufgabe geeignet ist.

Erfindungsgemäß kommt die Greifsimulation dabei zum Training einer künstlichen Intelligenz zum Einsatz, welche die Konstruktionsparametern erzeugt, wie dies im folgenden näher beschrieben ist.

Gemäß der vorliegenden Erfindung wird erfindungsgemäß eine künstliche Intelligenz angelernt, die einen optimalen Satz an Konstruktionsparametern findet, um das jeweilige Werkstück kollisionsfrei aus dem Behälter zu entnehmen und diesen zu entleeren. Das Anlernen erfolgt bevorzugt anhand der oben beschriebenen Simulation.

Die Bestimmung der Konstruktionsparameter erfolgt bevorzugt, indem aus einem vorgegebenen Greifer-Bausatz die optimale Kombination an Elementen und Geometrien für die jeweilige Greifaufgabe bestimmt wird. Der Greifer-Bausatz kann hierfür manuell erstellt und der künstlichen Intelligenz als Eingangsparameter vorgegeben werden.

Ein solcher Greifer-Bausatz kann beispielsweise aus folgenden Elementen und Geometrien bestehen bzw. die im folgenden aufgeführten Änderungsparameter aufweisen. Weiterhin kann der Greifer-Bausatz entsprechende CAD-Modelle umfassen.

Der Greifer-Bausatz kann entweder nur eine der folgenden Arten eines Greifers betreffen, oder für zwei oder drei Arten Elemente und/oder Geometrien enthalten:
∘ Mechanisch (Finger oder Backengreifer)
∘ Magnet
∘ Saug

Unabhängig von der Art des Greifers kann der Bausatz folgende Änderungen bezüglich der allgemeinen Geometrie erlauben:
- Anzahl und/oder Anordnung der Greifelemente
- Kröpfung
- Länge
- Breite
- Verschiedene Winkel

Je nach Art des Greifers können weitere Konstruktionsparameter zur Verfügung stehen.

Bei einem mechanischen Greifer mit mehreren relativ zueinander beweglichen Greifelementen, insbesondere Fingern oder Backen, können beispielsweise folgende Parameter bezüglich der Greifelemente änderbar sein:
- Anzahl
- Achse
- Länge
- Hub (Offen und Geschlossen)
- Greifkraft

Bei einem Sauggreifer können beispielsweise folgende Parameter änderbar sein:
- Länge des oder der Saugelemente
- Abstand der Saugelemente
- Winkelausrichtung des oder der Saugelemente
- Saugkraft des oder der Saugelemente

Bei einem Magnetgreifer können beispielsweise folgende Parameter änderbar sein:
- Haltekraft des oder der Magnetelemente
- Polschuh

Bei einem Bausatz können dabei auch nur eine Untergruppe der oben genannten Parameter änderbar sein.

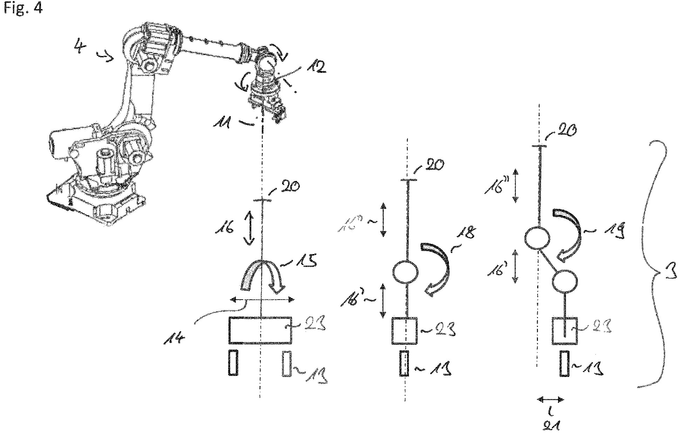

Fig. 4 zeigt dabei mögliche Konstruktionsparameter eines mechanischen Greifers 3 mit zwei an einem Grundkörper 23 angeordneten relativ zueinander beweglichen Greifelementen 13, insbesondere Greiffingern.

Der Greifer weist dabei ein Kopplungselement 20 auf, mit welchem er an dem letzten Glied 12 der den Greifer bewegenden Vorrichtung 4, insbesondere an dem Endglied eines Roboters, befestigbar ist. Das Endglied kann dabei im Ausführungsbeispiel um eine letzte Drehachse 11 der Vorrichtung 4 gedreht werden, wobei diese im Ausführungsbeispiel in Längsrichtung des Endgliedes verläuft und/oder eine Drehung um mehr als 180°, bevorzugt von mindestens 360° erlaubt.

Links sind dabei als Konstruktionsparameter die Länge 16 des Greifers in Richtung der letzten Drehachse 11, die Breite 14 des Greifers senkrecht zu dieser Richtung, sowie die Winkelstellung bzw. Neigung 15 der Bewegungsachse der Greifelemente 13 relativ zur letzten Drehachse 11 gezeigt. Als weiterer Konstruktionsparameter steht hier die symmetrische bzw. asymmetrische Anordnung des Hubwegs relativ zur letzten Drehachse 11 zur Verfügung.

In der Mitte sind als Konstruktionsparameter zusätzlich eine Winkel- bzw. Schrägstellung 18 der Längserstreckung der Greifelemente relativ zur letzten Drehachse 11 gezeigt. Dies kann beispielsweise durch einen Knick eines Greifarmelementes bereitgestellt werden, welches das Ankopplungselement 20 mit dem Grundkörper 23 verbindet. Die Längen der jeweiligen Abschnitte des Greifarmelementes sind als 16' und 16" bezeichnet und ebenfalls mögliche Konstruktionsparameter.

Rechts in Fig. 4 ist eine Kröpfung 21 der Greifelemente dargestellt, d.h. die Anordnung der durch die jeweilige Längserstreckung der Greifelemente definierten Ebene in einem Abstand 21 zur letzten Drehachse 11. Dies kann wiederum durch ein Greifarmelement mit zwei Knicken bereitgestellt werden. Die Winkelstellung 19 des ersten Knicks kann dabei ebenfalls einen Konstruktionsparameter darstellen.

Die Greifaufgabe besteht in dem Entleeren des Behälters und wird insbesondere definiert durch:
- Werkstück
- Größe des Behälters
- sonstige Bauwerke in der Zelle (wegen Kollision),
- geordnete/ ungeordnete Anordnung der Werkstücke im Behälter

Die künstliche Intelligenz hat nun die Funktion, für eine solche Greifaufgabe uns insbesondere ein vorgegebenes Werkstück einen möglichst optimalen Greifer zu bestimmen. Dabei gibt es unterschiedliche Konstruktionsparameter, welche die KI anpassen kann, insbesondere die oben zum Greifer-Bausatz beschriebenen Konstruktionsparameter. Aus den Ergebnisparametern der künstliche Intelligenz wird automatisiert ein virtuelles Modell des Greifers, beispielsweise in Form von Geometriedaten und/oder Kinematikdaten des Greifers, insbesondere in Form eines Greifer-CAD-Modells, erstellt. Dieses virtuelle Modell des Greifers kann mittels Simulation überprüft werden, insbesondere so, wie dies oben beschrieben wurde. Je nach Ergebnis der Simulation soll das Verhalten der künstlichen Intelligenz belohnt oder bestraft werden, um diese zu trainieren.

Mögliche Eingangsparameter der künstlichen Intelligenz, welche vom Benutzer bzw.
Software vorgegeben werden, sind:
∘ Greifer Bausatz
∘ Art des Greifers (Finger, Magnet, ..)
∘ CAD Model oder Punktewolke des Werkstücks
∘ Wo am Werkstück kann gegriffen werden
∘ Ausrichtung des Werkstücks im Behälter (Chaotisch, Vorsortiert, ..)
∘ Pfad des Roboters rein und raus aus dem Behälter

Die Simulation des Greifes der Bauteile kann anhand einer Bahnplanung erfolgen, welche zum Ansteuern der Vorrichtung, welche den Greifer bewegt, und zur Ansteuerung des Greifers eingesetzt wird.

In der Bahnplanung kann auch der Fall von Notgriffstrategien vorkommen. D.h. um eine Vollständige Entleerung des Behälters zu ermöglichen, kann die Bahnplanung, wenn kein Werkstück erkannt wird, das regulär gegriffen werden kann, sogenannte Notgriffe durchführen.

Dazu kann der Roboter an Greifpunkten greifen, die eigentlich nicht erlaubt sind und
- kann das Werkstück an eine andere Position im Behälter ziehen.
- das Werkstück aufheben und gezielt von einer geringen Höhe über dem Behälter wieder in den Behälter fallen lassen

Alternativ oder zusätzlich kann der Greifer in den Behälter bewegt werden und fährt langsam nahe an Wänden und Boden des Behälters um die Werkstücke "durch Umrühren" im Behälter zu bewegen, sodass Greifpunkte/flächen wieder erkennbar sind. Die Langsame Kollision mit Werkstücken ist in diesem Fall zulässig und erwünscht.

Dies kann in der Simulation und/oder der Bahnplanung berücksichtigt werden, jedoch wird der häufige Einsatz von Notstrategien für die künstliche Intelligenz als negativ bewertet. Je seltener der Einsatz von Notstrategien, desto besser.

Eine Belohnung kann insbesondere für folgendes erfolgen:
∘ Schnelle Berechnungszeit bei der Greifpunktberechnung (Starke Belohnung)
∘ Entleerungsgrad der Kiste ist hoch (Starke Belohnung, je höher der Entleerungsgrad desto höher die Belohnung)
∘ Bauteil fliegt bei der Entnahme nicht aus dem Greifer (Mittlere Belohnung)
∘ Bei der Entnahme verhaken sich keine Teile ineinander (Schwache Belohnung)

Ein aktives Fallenlassen von Werkstücken im Rahmen einer der oben beschriebenen Notgriffstrategien wird bei der Bewertung, inwieweit Bauteile bei der Entnahme ungewollt aus dem Greifer fallen, nicht einbezogen.

Eine Bestrafung kann insbesondere für folgendes erfolgen:
∘ Keine Greifpunkte gefunden (Starke Bestrafung)
∘ Niedriger Entleerungsgrad (Mittlere Bestrafung, je niedriger der Entleerungsgrad desto höher die Bestrafung)
∘ Lange Berechnungszeiten für Greifpunkte (niedrige Bestrafung)
∘ Hohe Anzahl von Notgriffstrategien

Als Ergebnis liefert die künstliche Intelligenz Konstruktionsparameter zu dem Greifer-Baukasten liefern, die für das gewünschte Werkstück optimiert sind. Mit Hilfe dieser Konstruktionsparameter kann anschließend automatisiert ein CAD-Modell des Greifers erstellt oder ein tatsächlicher Greifer gebaut werden.

Das Trainieren der künstlichen Intelligenz kann zum einen anhand der Greifaufgabe erfolgen, für welche ein geeigneter Greifer gesucht wird. Durch die Belohnung und Bestrafung lernt die künstliche Intelligenz dabei, welche der Konstruktionsparameter wie zu wählen sind, um diese Greifaufgabe zu lösen.

Die künstliche Intelligenz kann jedoch auch mit anderen Greifaufgaben und ggf. auch anderen Greifer-Bausätzen vortrainiert werden, um dann bei einer anderen Greifaufgabe und/oder einem andern Greifer-Bausatz zur Bestimmung der Konstruktionsparameter des Greifers eingesetzt zu werden.

Weiterhin können auch manuell entwickelte Greifer mit den zugehörigen Greifaufgaben zum Trainieren der künstlichen Intelligenz eingesetzt werden.

## Patentansprüche

1. Verfahren zur Herstellung eines Greifers (3), bei welchem eine automatische Bestimmung von Konstruktionsparametern des Greifers (3) durch mindestens ein Computersystem erfolgt, mit den Schritten:
- Vorgabe einer Greifaufgabe;
- Automatische Bestimmung von Konstruktionsparametern eines für die Greifaufgabe einsetzbaren Greifers durch das Computersystem, und
- Herstellung des Greifers auf Grundlage der Konstruktionsparameter;
**dadurch gekennzeichnet,**
**dass** die Greifaufgabe das Greifen von Werkstücken (1) aus einem Behälter (2) fasst, wobei im Rahmen der Greifaufgabe Werkstücke (1), welche in dem Behälter (2) enthalten sind, durch den Greifer (3) gegriffen und aus dem Behälter (2) entnommen werden, wobei die automatische Ermittlung der Konstruktionsparameter unter Verwendung einer künstlichen Intelligenz erfolgt, welche die Greifaufgabe als Eingangsparameter erhält,
wobei zum Trainieren der künstlichen Intelligenz eine Simulation des Greifens (3) der Werkstücke (1) aus dem Behälter (2) eingesetzt wird, welche auf einem virtuellen Modell des Greifers (3), der Werkstücke (1) und des Behälters (2) beruht, wobei die Simulation die Greifaufgabe in Form von virtuellen, ungeordnet und/oder geordnet in dem Behälter (2) angeordneten Werkstücken (1) simuliert, welche durch den virtuellen Greifer gegriffen und nacheinander aus dem Behälter entnommen werden, wobei die Simulation den gesamten Prozess der Entleerung des Behälters simuliert, und
wobei beim Trainieren der künstlichen Intelligenz die Belohnung und/oder Bestrafung unter Berücksichtigung des Entleerungsgrads des Behälters (2) erfolgt.

2. Verfahren nach Anspruch 1, wobei das virtuelle Modell weiterhin die zum Bewegen des Greifers (3) eingesetzte Vorrichtung, insbesondere einen Mehr-Achs-Roboters, simuliert.

3. Verfahren nach Anspruch 1 oder 2, wobei die Simulation einen oder mehrere der folgenden Faktoren simuliert:
- Auffinden von für den Greifer (3) zugänglichen Greifpunkten:
- Greifen von für den Greifer (3) zugänglichen Werkstücken (1);
- Bewegungen des Greifers (3) und/oder der zum Bewegen des Greifers eingesetzten Vorrichtung in den und aus dem Behälter (2);
- Kollisionen des Greifers (3) und/oder der zum Bewegen des Greifers eingesetzten Vorrichtung mit Werkstücken und/oder dem Behälter und/oder einer Störkontur.

4. Verfahren nach einem der vorangegangenen Ansprüche, wobei beim Trainieren der künstlichen Intelligenz die Belohnung und/oder Bestrafung weiterhin unter Berücksichtigung eines oder mehrerer der folgenden Werte erfolgt:
- Berechnungszeit bei der Greifpunktberechnung
- Auffindbarkeit von Greifpunkten
wobei bevorzugt weiterhin einer oder mehrerer der folgenden Werte berücksichtigt werden:
- Griffsicherheit beim Greifen der Werkstücke (1), und
- Verhackungsfreiheit der Werkstücke beim Entnehmen.

5. Verfahren nach einem der vorangegangenen Ansprüche, wobei die Konstruktionsparameter des Greifers (3) für einen vorgegebenen Bausatz von Elementen und/oder Geometrien bestimmt werden, aus welchen der Greifer aufgebaut wird, insbesondere einen vorgegebenen Bausatz von CAD-Elementen, wobei der Bausatz bevorzugt als Eingangsparameter von einem Benutzer oder einer Software vorgegeben werden.

6. Verfahren nach einem der vorangegangenen Ansprüche, wobei die Konstruktionsparameter die Anzahl und/oder geometrische Anordnung von Greifelementen am Greifer (3) und/oder die Abmessungen des Greifers (3) betreffen, wobei die Konstruktionsparameter bevorzugt einen oder mehrere der folgenden Parameter des Greifers umfassen:
- Anzahl der Greifelemente;
- Anordnung und/oder Ausrichtung der Greifelemente
- Kröpfung des Greifers und/oder des oder der Greifelemente bezüglich der letzten Achse der zum Bewegen des Greifers eingesetzten Vorrichtung;
- Länge des Greifers
- Breite des Greifers
- Winkelausrichtung einer Hauptachse des Greifers und/oder einer Hauptachse des oder der Greifelemente bezüglich der letzten Achse der zum Bewegen des Greifers eingesetzten Vorrichtung.

7. Verfahren nach einem der vorangegangenen Ansprüche, wobei es sich bei dem Greifer (3) um einen mechanischen Greifer mit einer Mehrzahl von Greifelementen, insbesondere einer Mehrzahl von Fingern oder Backen, handelt und die Konstruktionsparameter einen oder mehrere der folgenden Parameter des Greifers umfassen:
- Länge der Greifelemente
- Breite der Greifelemente
- Knickwinkel innerhalb des oder Greifelemente
- Hubweg
- Greifkraft.

8. Verfahren nach einem der Ansprüche 1 bis 6, wobei es sich bei dem Greifer (3) um einen Magnetgreifer oder einen Sauggreifer handelt, bei welchem es sich bei den Greifelementen um Saugelemente oder Magnetelemente handelt und die Konstruktionsparameter einen oder mehrere der folgenden Parameter des Greifers umfassen:
- für einen Sauggreifer:
- Länge des oder der Saugelemente
- Abstand der Saugelemente
- Winkelausrichtung des oder der Saugelemente
- Saugkraft des oder der Saugelemente
- für einen magnetischen Greifer:
- Haltekraft des oder der Magnetelemente
- geometrische Ausgestaltung des Polschuhs des oder der Magnetelemente.

9. Verfahren nach einem der vorangegangenen Ansprüche, wobei zur Vorgabe der Greifaufgabe als Eingangsparameter einer oder mehrere der folgenden Werte von einem Benutzer oder einer Software vorgegeben werden:
- Art des Greifers (3)
- CAD Model der Werkstücke
- Greifbereiche an den Werkstücken
- Größe und/oder CAD-Modell des Behälters
- Anordnung der Werkstücke im Behälter
- Störkonturen in der Umgebung des Behälters
- Pfad des Greifers in und aus dem Behälter.

10. Verfahren nach einem der vorangegangenen Ansprüche, wobei ein von der künstlichen Intelligenz ausgegebener Satz von Konstruktionsparametern durch eine automatisierte Variation der Konstruktionsparameter und virtuelle Überprüfung der so definierten Greifer (3) optimiert wird, wobei zur Überprüfung bevorzugt eine Simulation des Greifens der Werkstücke aus dem Behälter eingesetzt wird, welche auf einem virtuellen Modell des jeweiligen Greifers, der Werkstücke und des Behälters beruht.

## Claims

1. Method for manufacturing a gripper (3),
in which an automatic determination of design parameters of the gripper (3) is carried out by at least one computer system, comprising the steps of:
- specification of a gripping task;
- automatic determination, by the computer system, of design parameters of a gripper usable for the gripping task, and
- manufacture of the gripper on the basis of the design parameters;
**characterized in that**
the gripping task comprises gripping workpieces (1) out of a container (2), wherein, within the scope of the gripping task, workpieces (1) that are contained in the container (2) are gripped by the gripper (3) and removed from the container (2), wherein the automatic determination of the design parameters is carried out using artificial intelligence that receives the gripping task as an input parameter,
wherein, for training the artificial intelligence, a simulation of the gripping of the workpieces (1) out of the container (2) is used, which is based on a virtual model of the gripper (3), the workpieces (1), and the container (2), wherein the simulation simulates the gripping task in the form of virtual workpieces (1) arranged in the container (2) in an unordered and/or ordered manner, which are gripped by the virtual gripper and removed from the container one after another, wherein the simulation simulates the entire process of emptying the container, and
wherein, during training of the artificial intelligence, reward and/or punishment takes place taking into account the degree of emptying of the container (2).

2. Method according to claim 1, wherein the virtual model further simulates the device used for moving the gripper (3), in particular a multi-axis robot.

3. Method according to claim 1 or 2, wherein the simulation simulates one or more of the following factors:
- finding gripping points accessible to the gripper (3);
- gripping workpieces (1) accessible to the gripper (3);
- movements of the gripper (3) and/or of the device used for moving the gripper into and out of the container (2);
- collisions of the gripper (3) and/or of the device used for moving the gripper with workpieces and/or the container and/or an interference contour.

4. Method according to one of the preceding claims, wherein during training of the artificial intelligence reward and/or punishment also takes place taking into account one or more of the following values:
- computation time in the gripping-point calculation
- findability of gripping points
wherein preferably one or more of the following values are furthermore taken into account:
- grip reliability when gripping the workpieces (1), and
- freedom from snagging of the workpieces during removal.

5. Method according to one of the preceding claims, wherein the design parameters of the gripper (3) are determined for a predefined kit of elements and/or geometries from which the gripper is built, in particular a predefined kit of CAD elements, wherein the kit is preferably specified as an input parameter by a user or by software.

6. Method according to one of the preceding claims, wherein the design parameters relate to the number and/or geometric arrangement of gripping elements on the gripper (3) and/or the dimensions of the gripper (3), wherein the design parameters preferably comprise one or more of the following parameters of the gripper:
- number of the gripping elements;
- arrangement and/or orientation of the gripping elements
- offset of the gripper and/or of the gripping element or elements relative to the last axis of the device used for moving the gripper;
- length of the gripper
- width of the gripper
- angular orientation of a main axis of the gripper and/or of a main axis of the gripping element or elements relative to the last axis of the device used for moving the gripper.

7. Method according to one of the preceding claims, wherein the gripper (3) is a mechanical gripper having a plurality of gripping elements, in particular a plurality of fingers or jaws, and the design parameters comprise one or more of the following parameters of the gripper:
- length of the gripping elements
- width of the gripping elements
- bend angle within the gripping element or elements
- stroke
- gripping force.

8. Method according to one of claims 1 to 6, wherein the gripper (3) is a magnetic gripper or a suction gripper, in which the gripping elements are suction elements or magnetic elements, and the design parameters comprise one or more of the following parameters of the gripper:
- for a suction gripper:
- length of the suction element or elements
- distance between the suction elements
- angular orientation of the suction element or elements
- suction force of the suction element or elements
- for a magnetic gripper:
- holding force of the magnetic element or elements
- geometric configuration of the pole shoe of the magnetic element or elements.

9. Method according to one of the preceding claims, wherein, for specifying the gripping task, one or more of the following values are specified as input parameters by a user or by software:
- type of the gripper (3)
- CAD model of the workpieces
- gripping regions on the workpieces
- size and/or CAD model of the container
- arrangement of the workpieces in the container
- interference contours in the environment of the container
- path of the gripper into and out of the container.

10. Method according to one of the preceding claims, wherein a set of design parameters output by the artificial intelligence is optimized by an automated variation of the design parameters and virtual checking of the grippers (3) defined in this way, wherein for the checking preferably a simulation of the gripping of the workpieces out of the container is used, which is based on a virtual model of the respective gripper, the workpieces, and the container.

## Revendications

1. Procédé de fabrication d'un préhenseur (3),
dans lequel une détermination automatique des paramètres de conception du préhenseur (3) est effectuée par au moins un système informatique, comprenant les étapes suivantes :
- spécification d'une tâche de préhension ;
- détermination automatique, par le système informatique, de paramètres de conception d'un préhenseur pouvant être utilisé pour la tâche de préhension, et
- fabrication du préhenseur sur la base des paramètres de conception ;
**caractérisé en ce que**
la tâche de préhension comprend la préhension de pièces (1) à partir d'un conteneur (2), dans le cadre de la tâche de préhension des pièces (1), qui sont contenues dans le conteneur (2), étant saisies par le préhenseur (3) et retirées du conteneur (2), la détermination automatique des paramètres de conception étant effectuée au moyen d'une intelligence artificielle qui reçoit la tâche de préhension comme paramètre d'entrée,
une simulation de la préhension (3) des pièces (1) à partir du conteneur (2), reposant sur un modèle virtuel du préhenseur (3), des pièces (1) et du conteneur (2), étant utilisée pour entraîner l'intelligence artificielle, la simulation reproduisant la tâche de préhension sous la forme de pièces (1) virtuelles disposées de manière désordonnée et/ou ordonnée dans le conteneur (2), lesquelles sont saisies par le préhenseur virtuel et retirées successivement du conteneur, la simulation reproduisant l'ensemble du processus de vidage du conteneur, et
lors de l'entraînement de l'intelligence artificielle, la récompense et/ou la pénalisation étant effectuées en tenant compte du degré de vidage du conteneur (2).

2. Procédé selon la revendication 1, dans lequel le modèle virtuel simule en outre le dispositif utilisé pour déplacer le préhenseur (3), notamment un robot multi-axes.

3. Procédé selon la revendication 1 ou 2, dans lequel la simulation reproduit un ou plusieurs des facteurs suivants :
- détection de points de préhension accessibles au préhenseur (3) ;
- préhension de pièces (1) accessibles au préhenseur (3) ;
- mouvements du préhenseur (3) et/ou du dispositif utilisé pour déplacer le préhenseur dans le conteneur (2) et hors du conteneur (2) ;
- collisions du préhenseur (3) et/ou du dispositif utilisé pour déplacer le préhenseur avec des pièces et/ou le conteneur et/ou un contour parasite.

4. Procédé selon l'une des revendications précédentes, dans lequel, lors de l'entraînement de l'intelligence artificielle, la récompense et/ou la pénalisation est en outre effectuée en tenant compte d'une ou de plusieurs des valeurs suivantes :
- temps de calcul lors du calcul du point de préhension
- aptitude à trouver des points de préhension
étant en outre pris en compte de préférence une ou plusieurs des valeurs suivantes :
- sécurité de préhension lors de la saisie des pièces (1), et
- absence d'accrochage des pièces lors du retrait.

5. Procédé selon l'une des revendications précédentes, dans lequel les paramètres de conception du préhenseur (3) sont déterminés pour un kit prédéfini d'éléments et/ou de géométries à partir desquels le préhenseur est construit, notamment un kit prédéfini d'éléments CAO, le kit étant de préférence spécifié comme paramètre d'entrée par un utilisateur ou un logiciel.

6. Procédé selon l'une des revendications précédentes, dans lequel les paramètres de conception concernent le nombre et/ou la disposition géométrique d'éléments de préhension sur le préhenseur (3) et/ou les dimensions du préhenseur (3),
les paramètres de conception comprenant de préférence un ou plusieurs des paramètres suivants du préhenseur :
- nombre des éléments de préhension ;
- disposition et/ou orientation des éléments de préhension
- déport du préhenseur et/ou du ou des éléments de préhension par rapport au dernier axe du dispositif utilisé pour déplacer le préhenseur ;
- longueur du préhenseur
- largeur du préhenseur
- orientation angulaire d'un axe principal du préhenseur et/ou d'un axe principal du ou des éléments de préhension par rapport au dernier axe du dispositif utilisé pour déplacer le préhenseur.

7. Procédé selon l'une des revendications précédentes, dans lequel le préhenseur (3) est un préhenseur mécanique comportant une pluralité d'éléments de préhension, notamment une pluralité de doigts ou de mâchoires, et les paramètres de conception comprennent un ou plusieurs des paramètres suivants du préhenseur :
- longueur des éléments de préhension
- largeur des éléments de préhension
- angle de pliure à l'intérieur du ou des éléments de préhension
- course
- force de préhension.

8. Procédé selon l'une des revendications 1 à 6, dans lequel le préhenseur (3) est un préhenseur magnétique ou un préhenseur à ventouse, dans lequel les éléments de préhension sont des éléments d'aspiration ou des éléments magnétiques et les paramètres de conception comprennent un ou plusieurs des paramètres suivants du préhenseur :
- pour un préhenseur à ventouse :
- longueur du ou des éléments d'aspiration
- distance entre les éléments d'aspiration
- orientation angulaire du ou des éléments d'aspiration
- force d'aspiration du ou des éléments d'aspiration
- pour un préhenseur magnétique :
- force de maintien du ou des éléments magnétiques
- configuration géométrique du sabot polaire du ou des éléments magnétiques.

9. Procédé selon l'une des revendications précédentes, dans lequel, pour la spécification de la tâche de préhension comme paramètre d'entrée, une ou plusieurs des valeurs suivantes sont spécifiées par un utilisateur ou un logiciel:
- type du préhenseur (3)
- modèle CAO des pièces
- zones de préhension sur les pièces
- taille et/ou modèle CAO du conteneur
- disposition des pièces dans le conteneur
- contours parasites dans l'environnement du conteneur
- trajectoire du préhenseur dans le conteneur et hors du conteneur.

10. Procédé selon l'une des revendications précédentes, dans lequel un ensemble de paramètres de conception émis par l'intelligence artificielle est optimisé par une variation automatisée des paramètres de conception et une vérification virtuelle des préhenseurs (3) ainsi définis, une simulation de la préhension des pièces à partir du conteneur, reposant sur un modèle virtuel du préhenseur respectif, des pièces et du conteneur, étant de préférence utilisée pour la vérification.
